Europäisches Patentamt

European Patent Office

Office européen des brevets

(19)

(11) Numéro de publication : **0 142 506**
**B1**

# (12) FASCICULE DE BREVET EUROPÉEN

(45) Date de publication du fascicule du brevet :
20.01.88

(51) Int. Cl.⁴ : **F 03 D   1/06**

(21) Numéro de dépôt : **84901086.3**

(22) Date de dépôt : **13.03.84**

(86) Numéro de dépôt international :
**PCT/FR 84/00061**

(87) Numéro de publication internationale :
**WO/8403737 (27.09.84 Gazette 84/23)**

(54) **HELICE D'EOLIENNE.**

(30) Priorité : **15.03.83 FR 8304204**

(43) Date de publication de la demande :
**29.05.85 Bulletin 85/22**

(45) Mention de la délivrance du brevet :
**20.01.88 Bulletin 88/03**

(84) Etats contractants désignés :
**AT BE DE GB NL SE**

(56) Documents cités :
**EP-A- 0 062 737**
**DE-C-    40 672**
**DE-C-   227 733**
**GB-A-   485 072**
**US-A- 1 361 019**

(73) Titulaire : **PROCEDES TECHNIQUES DE CONSTRUC-
TION**
**9, Place des Ternes**
**F-75848 ParisCedex 17 (FR)**

(72) Inventeur : **D'ABOVILLE, Yanic**
**19, avenue du Maréchal Douglas Haig**
**F-78000 Versailles (FR)**

(74) Mandataire : **Marquer, Francis et al**
**CABINET MOUTARD 35, avenue Victor Hugo Résidence Champfleury**
**F-78180 Voisins-le-Bretonneux (FR)**

EP 0 142 506 B1

## Description

L'invention se rapporte aux hélices d'éoliennes.

Elle se propose de réaliser une hélice à pales fixes de construction particulièrement économique et fiable et de bon rendement, qui sera très bien adaptée à son utilisation pour entraîner, par l'intermédiaire d'un multiplicateur, un générateur d'électricité à bon marché, en vue de la production compétitive d'électricité.

Ce problème n'est pas résolu jusqu'ici en pratique. En effet, les hélices multipales habituellement utilisées pour pomper l'eau, telles que par exemple celle qui se trouve décrite dans le brevet DE-C-40 672, sont de construction rustique, mais ont un rendement insuffisant, tandis que les hélices rapides, d'excellent rendement, sont très onéreuses et présentent des difficultés importantes de réalisation, qui en excluent un usage courant et extensif.

L'invention propose donc une hélice d'éolienne de construction économique et fiable, comportant, d'une façon analogue à celle décrite dans le brevet DE précité, un arbre muni d'un moyeu auquel sont fixées des pales constituées de feuilles minces, ces pales étant fixées sur des traverses, elles-mêmes fixées à des poutres de section carrée, lesdites poutres étant fixées sur une face du moyeu en forme de plaque fixé perpendiculairement à l'arbre.

Selon l'invention, cette hélice est plus particulièrement caractérisée en ce que lesdites pales sont vrillées et en ce que lesdites poutres sont des tubes de section carrée vrillés avant montage.

Suivant une autre particularité de l'invention, l'hélice comporte entre huit et douze pales à pas fixe vrillées d'environ 27°, dont l'extrémité extérieure est calée à un angle d'environ 15° par rapport au plan de l'hélice, la largeur de chaque pale étant sensiblement uniforme et égale à environ un sixième du rayon de l'hélice.

Suivant une réalisation préférée, la distance entre le bord d'attaque de chaque pale et le tube qui la supporte est égale à environ trois dixièmes de la largeur de la pale.

Les diverses particularités, ainsi que les avantages de l'invention, apparaîtront clairement à la lumière de la description ci-après.

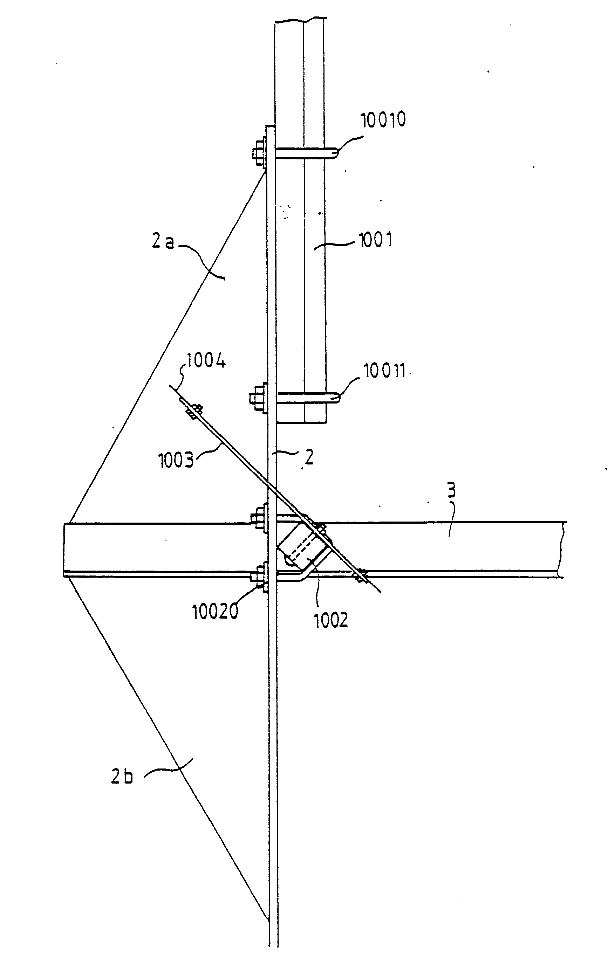

La figure unique du dessin annexé représente schématiquement et partiellement la structure d'une hélice conforme à un mode d'exécution préféré de l'invention.

A la figure unique, on a représenté le moyeu 2 et l'arbre 3 de l'hélice. L'arbre 3 est constitué d'un tube creux ayant par exemple 65 mm de diamètre, pour une hélice de 6 m de diamètre comportant 10 pales. Le moyeu en tôle 2, et ses équerres de renforts telles que 2a, 2b, sont soudés sur cet arbre. Ce moyeu est par exemple découpé en forme de cercle. L'arbre 3 est monté sur deux paliers à roulements fixés sur une plate-forme. Ces éléments n'ont pas été figurés. Sur la face du moyeu située du côté de la plate-forme sont fixés des tubes 1001-1002 de section carrée, ayant par exemple 30 ou 40 mm de côté, au moyen de brides boulonnées 10010, 10011, 10020 respectivement, à cheval sur le pied du tube. Ces tubes sont vrillés avant montage d'environ 27° dans un exemple préféré. Les pales 1004 proprement dites, qui, en ce cas, sont également vrillées d'environ 27°, réalisées par exemple en tôle de « Duralinox » (marque déposée) de 1 mm d'épaisseur, sont boulonnées sur des traverses telles que 1003, elles-mêmes boulonnées sur chaque tube. Cette construction permet de réaliser une hélice de faible poids (170 kg dans l'exemple considéré), facile à monter à partir d'éléments séparés. L'assemblage est stable, les brides réalisant un auto-serrage s'opposant au glissement des tubes sous l'action de la force centrifuge. Les pales sont calées de façon que leur extrémité extérieure fasse un angle d'environ 15° (à titre d'exemple préféré) par rapport au plan de l'hélice.

La largeur de chaque pale est uniforme et environ égale au 6ème du rayon de l'hélice. La distance entre son bord d'attaque et le tube de support est environ égale au 3/10ème de cette largeur.

Les caractéristiques de l'hélice mentionnées ci-dessus permettent, d'obtenir, avec une vitesse spécifique modérée (environ 2) qui autorise une construction relativement rustique, un rendement relativement élevé : par exemple environ 60 à 65 % de la limite de Betz. A titre de comparaison, une hélice lente, de vitesse spécifique environ égale à 1, avec 12 à 24 pales, a généralement un rendement de l'ordre de 50 % seulement, tandis qu'une hélice rapide de vitesse spécifique comprise entre 3 et 5, avec 2 à 4 pales, a généralement un rendement de l'ordre de 65 à 70 %.

## Revendications

1. Hélice d'éolienne comportant un arbre (3) muni d'un moyeu auquel sont fixées des pales (1004) constituées de feuilles minces, ces pales étant fixées sur des traverses (1003), elles-mêmes fixées à des poutres de section carrée, lesdites poutres étant fixées sur une face du moyeu (2) en forme de plaque fixé perpendiculairement audit arbre, caractérisée en ce que lesdites pales sont vrillées et en ce que lesdites poutres sont des tubes de section carrée (1001, 1002) vrillés avant montage.

2. Hélice selon la revendication 1, caractérisée en ce qu'elle comporte entre huit et douze pales à pas fixe vrillées d'environ 27°, dont l'extrémité extérieure est calée à un angle d'environ 15° par rapport au plan de l'hélice, la largeur de chaque pale étant sensiblement uniforme et égale à environ un sixième du rayon de l'hélice.

3. Hélice selon la revendication 2, caractérisée en ce que la distance entre le bord d'attaque de chaque pale et le tube qui la supporte est égale à environ trois dixièmes de la largeur de la pale.

4. Hélice selon la revendication 1, caractérisée en ce que les traverses sont boulonnées sur les tubes et ceux-ci sont fixés sur une face du moyeu au moyen de brides (10010, 10011) à cheval sur leur pied.

## Claims

1. A wind turbine propeller having a shaft (3) with a hub to which are secured blades (1004) made of thin sheets, these blades being fixed to cross-pieces (1003) which are, in their turn, fixed to girders with a square section said girders being fixed to one face of the hub (2) having the form of a plate perpendicularly secured to said shaft, characterized in that said blades are twisted and in that said beams are tubes (1001, 1002) with a square section twisted before mounting.

2. The propeller as claimed in claim 1, characterized in that it comprises between eight and twelve blades with a fixed pitch, twisted at about 27°, whose outer end is adjusted at an angle of about 15° with respect to the level of the propeller the width of each blade being substantially uniform and equal to about one sixth of the propeller radius.

3. The propeller as claimed in claim 2, characterized in that the distance between the front edge of each blade and the tube by which it is carried is equal to about three times the width of the blade.

4. The propeller as claimed in claim 1, characterized in that the cross-pieces are bolted to the tubes and these latter are secured to one face of the hub by means of flanges (10010 10011) astride its lower end.

## Patentansprüche

1. Windradrotor mit einem Schaft (3), der mit einer Nabe versehen ist an der Flügel (1404) befestigt sind, die aus dünnen Folien bestehen wobei diese Flügel auf Rippen (1003) befestigt sind, die ihrerseits auf Trägern mit viereckigem Querschnitt befestigt sind, wobei besagte Träger auf einer Fläche der Nabe (2) befestigt sind, welche die Form einer senkrecht zum Schaft befestigten Platte hat, dadurch gekennzeichnet, dass besagte Flügel gewunden sind und besagte Träger Rohre (1001 1002) mit viereckigem Querschnitt sind, die vor dem Einbau gewunden werden.

2. Rotor nach Anspruch 1, dadurch gekennzeichnet, dass er zwischen acht und zwölf, um etwa 27° gewundene Flügel mit gleichbleibender Steigung besitzt, deren ausseres Ende in einem Winkel von etwa 15° im Verhältnis zur Rotorebene festgestellt ist, wobei die Breite eines jeden Flügels im wesentlichen einheitlich ist und etwa ein Sechstel des Rotorhalbmessers beträgt.

3. Rotor nach Anspruch 2, dadurch gekennzeichnet, dass die Entfernung zwischen der Vorderkante eines jeden Flügels und dem Rohr, welches den Flügel trägt, etwa drei Zehntel der Flügelbreite beträgt.

4. Rotor nach Anspruch 1, dadurch gekennzeichnet, dass die Rippen durch Bolzen auf den Rohren befestigt sind und diese ihrerseits durch auf ihrem Fussende aufsitzende Flansche (10010, 10011) auf einer Nabenfläche befestigt sind.